# EUROPEAN PATENT APPLICATION

(11) **EP 1 782 945 A1**
(43) Date of publication of application: **09.05.2007**
(21) Application number: 06252667.8
(22) Date of filing: 22.05.2006
(51) Int. Cl.: B32B 5/26, B65D 81/26

(54) **Breathable plastic packaging for produced products**

(30) Priority: 07.06.2005 US 688308 P; 08.02.2006 US 350242
(71) Applicant: Cryovac, Inc., Duncan, S.C. 29334-0464 (US)
(72) Inventor: Gelotte, Susannah, D., Simpsonville, South Carolina 29302 (US); Miranda, Nathanael, R., Spartanburg, South Carolina 29302 (US)
(74) Representative: Jackson, Martin Peter

(57) **Abstract**

A package includes a support member; an oxygen sensitive product disposed on the support member; and a non-woven lid; wherein the non-woven lid has a Gurley Hill porosity (TAPPI T460) of from 1 to 10 seconds per 100 cubic centimeters. A process for packaging an oxygen sensitive product includes providing a support member; placing the oxygen sensitive product on the support member; and adhering a non-woven material to the support member such that a closed package is made; wherein the non-woven material has a Gurley Hill porosity (TAPPI T460) of from 1 to 10 seconds per 100 cubic centimeters.

## Description

This application claims the benefit of U.S. Provisional Application Serial No. 60/688308 filed June 7, 2005, the contents of which are hereby incorporated by reference.

### Field Of The Invention

The present invention relates to a produce package having a high air permeability non-woven non-forming web.

### Background Of The Invention

Multilayer films have been used for the packaging of oxygen sensitive products, such as produce, which exhibit lower shelf life in the presence of too little oxygen in the package. In such multilayer films, the oxygen transmission rate is of primary importance, such as in the packaging of products as vegetables, fruits, and cheese. For example, in the packaging of precut lettuce, if the concentration of oxygen in the package is too low, the lettuce tends to spoil due to anaerobiosis.

Certain products such as asparagus, green beans, broccoli, cauliflower, brussel sprouts, and alfalfa sprouts, are particularly difficult to package with current packaging technologies because of the need for very high oxygen transmission rates in the packaging material.

### Summary Of The Invention

In a first aspect, a package comprises a support member; an oxygen sensitive product disposed on the support member; and a non-woven lid; wherein the non-woven lid has a Gurley Hill porosity (TAPPI T460) of from 1 to 10 seconds per 100 cubic centimeters.

In a second aspect, a process for packaging an oxygen sensitive product comprises providing a support member; placing the oxygen sensitive product on the support member; and adhering a non-woven material to the support member such that a closed package is made; wherein the non-woven material has a Gurley Hill porosity (TAPPI T460) of from 1 to 10 seconds per 100 cubic centimeters.

### Definitions

"oxygen sensitive product" and the like herein refers to a product, such as produce, that exhibits lower shelf life when packaged in an environment with too little oxygen.

"produce" herein refers to vegetables such as asparagus, lettuce, cabbage, broccoli, green beans, cauliflower, kale, carrot, onion, pepper, corn, radish, endive, chard, chicory, radicchio, greens, peas, squash, escarole, brussel sprouts, spinach, alfalfa sprouts and mushrooms, and fruits such as melon and berries.

"non-woven" herein refers to material that is made up of very fine synthetic fibers, typically polyethylene and/or polypropylene, that are made by various processes and laid down in a typically randomly distributed, non-directional pattern, and subjected to heat and pressure to form a web or sheet.

"polymer" herein refers to the product of a polymerization reaction, and is inclusive of homopolymers, copolymers, terpolymers, tetrapolymers, etc..

"copolymer" herein refers to a polymer formed by the polymerization reaction of at least two different monomers and is inclusive of random copolymers, block copolymers, graft copolymers, etc.

"seal" herein refers to a bonding of a first surface to a second surface created by heating (e.g., by means of a heated bar, hot air, infrared radiation, ultrasonic sealing, etc.) the respective surfaces to at least their respective seal initiation temperatures, or by alternative means such as adhesive; and

"lid" herein refers to a covering, usually a top, of a package. In some embodiments, the "lid" will not be at the actual top of the final package, e.g. as shown in further embodiments described below.

All compositional percentages used herein are presented on a "by weight" basis, unless designated otherwise.

### Brief Description of the Drawings

A detailed description of embodiments of the invention follows, with reference to the attached drawings, wherein:
FIG. 1 is a schematic cross-section of a package according to an embodiment of the present invention;
FIG. 2 is a schematic cross-section of a package according to an alternative embodiment of the present invention;
FIG. 3 is a schematic cross-section of a package according to a second alternative embodiment of the present invention;
FIG. 4 is a schematic cross-section of a package according to a third alternative embodiment of the present invention; and
Fig. 5 a schematic cross-section in another view of a package according to the third alternative embodiment of the present invention.

### Detailed Description Of The Invention

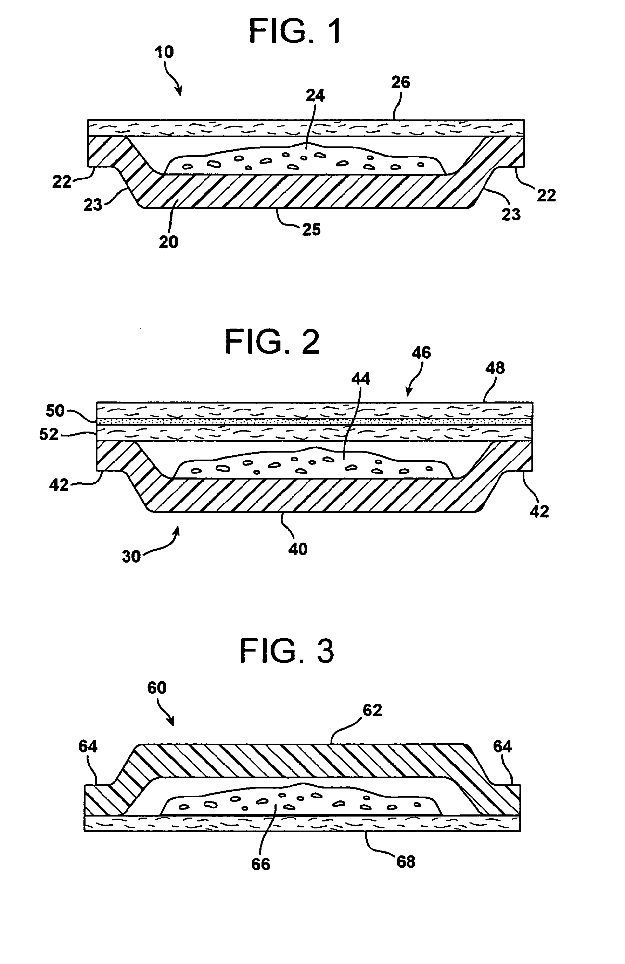

Referring to FIG. 1, a package 10 includes a support member 20, and flange 22. An oxygen sensitive product 24 is disposed on the support member 20. A non-woven lid 26 is disposed on the flange 22, and is beneficially sealed to the flange 22 by heat sealing, adhesive, or any other suitable means. The non-woven lid 26 is characterized by a Gurley Hill porosity (TAPPI T460) of from 1 to 10 seconds per 100 cubic centimeters, such as from 2 to 9 seconds, 3, to 8 seconds, 4 to 7 seconds, and from 5 to 6 seconds per 100 cubic centimeters. Non-woven materials exhibiting this porosity are available from BBA Fiberweb.

Non-wovens are a large class of fabrics that utilize thermoplastic materials that are extruded into fibers. These fibers are made into a web by various methods. BBA Fiberweb is one of many suppliers of such fabrics. BBA Fiberweb offers a wide array of materials for different end uses. Trade names of such products include but are not limited to CELESTRA^{™}, COROSOFT PLUS^{™}, COROLIND^{™}, TYPAR^{™}, and REEMAY^{™}. CE-LESTRA is a spunbond material. Typically, a polyolefin resin is extruded through a spinneret plate to create hundreds to thousands of individual fibers. These fibers are drawn and cooled with air to impart strength and other desired properties. They are then laid on a moving belt in a random fashion thus creating a web of fiber. This web is carried by a forming belt to a calendering roll. The web will pass between this calendering roll, which is typically but not always patterned, and a smooth roll. The raised points on a patterned calendering roll will melt the fibers together forming a welded spot, or bond. A plurality of bonds will transform this web into a fabric. Typical fabric properties are dependent on the raw materials extruded, the drawing of the fibers, the size and shape of the fibers, as well as the duration, size, and pattern of the bonds as well as other factors. Different extrusion technologies such as meltblown can impart different properties to the fabric. For example, COROSOFT PLUS is a Spunbond/Meltblown/Spunbond (SMS) fabric. Meltblown is a fiber that is much smaller in denier than typical spunbond fibers. These fibers tend to break easily during extrusion and are more like a spiderweb or silk strand than a spunbond fiber. To make an SMS, a layer of meltblown is sandwiched between two layers of spunbond which will effectively reduce the porosity of the material. This type fabric is often seen in filtration and medical applications. COROLIND is a BBA Fiberweb tradename for a polyethylene (PE) Spunbond. The PE fabric imparts a different feel, or hand, to the fabric. Other types of spunbonds include TYPAR and REEMAY, made from polypropylene (PP) and polyester terephthalate (PET) respectively.

Support member 20 can be a rigid or semi-rigid article and, in case it is shaped, can be thermoformed. Support member 20 can be in the form of a flat or shaped tray, and can be made from any suitable material, including solid or expanded embodiments, such as polyethylene, polypropylene, polystyrene, polyamide, 1,4- polymethylpentene (e.g. TPX^{™} available from Mitsui), or crystallized polyethylene terephthalate (CPET). The particular material and form can be selected based on its strength, its ability to support a product, and its ability to seal to the non-woven lid. Prior to any thermoforming step, support member 20 can be of any suitable thickness, e.g. from 10 to 50 mils thick, such as from 30 and 40 mils thick. If thermoformed into a tray, support member 20 will typically have different thicknesses in different regions of the tray. For example, the tray flange 22 will typically have a thickness of between 30 and 40 mils, such as 35 mils; the tray sides 23 will typically have a thickness of between 15 and 25 mils, such as 20 mils; and the tray bottom 25 will typically have a thickness of between 20 and 30 mils, such as 25 mils. The depth of the tray and other factors result in the thinning of the tray sides and tray bottom, accounting for the variations in thickness in different regions of the tray.

A transparent or at least highly translucent tray is often desirable for applications where the consumer wishes to view the contents of the package. A clear polyester tray, e.g. made from polyethylene terephthalate, can be used. Two materials currently used commercially as a forming web for produce packaging are the T6080^{™} coextruded laminate material, and NT6080^{™} laminate, both available from Sealed Air Corporation. Material such as that described in US Patent No. 4,735,855 (Wofford et al.), incorporated herein by reference in its entirety, can be used as a forming web.

Support member 20 can be of any suitable monolayer or multilayer construction, with or without an oxygen barrier layer, and transparent, translucent, or opaque.

In one embodiment, support member 20 can be in the form of a clam shell design, made from a material such as clear PET.

Non-woven lid 26 is sealed by any suitable means to flange 22 so that the bond between the lid 26 and flange 22 has a seal strength of from 1 to 10 pounds per inch, such as from 2 to 9, 3 to 8, 4 to 7, and 5 to 6 pounds per inch.

Figure 2 illustrates, in an alternative embodiment in accordance with the invention, a package like that of Figure 1, but including a non-woven laminate 46. Thus, package 30 includes a support member 40, and flange 42. An oxygen sensitive product 44 is disposed on the support member 40. The non-woven laminate 46 is disposed on the flange 42, and is beneficially sealed to the flange 42 by heat sealing, adhesive, or any other suitable means.

The non-woven laminate 46 includes a first non-woven web 48, and a second non-woven web 52. These webs are joined together by an adhesive layer 50. Adhesive layer 50 can comprise any suitable type of adhesive, such as hot melt adhesive, or can represent a seal, made by any suitable mechanism, for bonding webs 48 and 52 together either along their entire coextensive boundary, or at selected points of contact between webs 48 and 52.

Non-woven webs 48 and 52 can differ from one another in any of various parameters, including without limitation their physical construction, method of production, fiber chemistry, fiber size, or Gurley Hill porosity. These two non-woven webs thus can be selected to accommodate the intended product end-use application and physical and performance requirements.

Figure 3 illustrates, in an alternative embodiment in accordance with the invention, a package like that of Figure 1, but upside down. Thus, package 60 includes a support member 62, and flange 64. An oxygen sensitive product 66 is disposed in the final package 60. A non-woven lid 68 is disposed in contact with the flange 64, and is beneficially sealed to the flange 64 by heat sealing, adhesive, or any other suitable means. In embodiments where a transparent support member is used, it may be beneficial to produce a package with the support member occupying a position above the non-woven lid. This is particularly the case where, as is typical, the non-woven is an opaque material. The consumer is able to view the contents 66 of the package through the support member 62 if the support member is transparent.

In the embodiment of Figure 3, the package may in some cases not receive sufficient air flow because of the position of the non-woven lid, e.g. against a shipping carton, or another package.

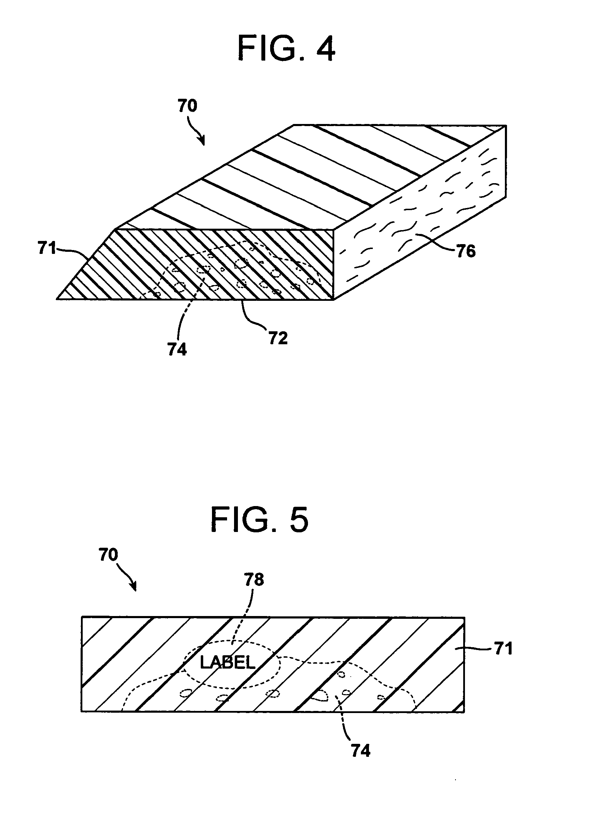

Figure 4 illustrates a package 70 in accordance with the invention having a support member 72 that holds an oxygen sensitive product 74 (shown in phantom), and a lid 76 comprising a non-woven material positioned on the side of the package. This arrangement allows in one embodiment a label 78 (see Figure 5) to be affixed to one side of the package; allows a consumer to view the contents 74 of the package (assuming the support web is transparent); and also allows the package to "breath" by positioning the non-woven lid 76, having high oxygen porosity, in a way that does not hinder the movement of oxygen out of and into the package when the package is in the orientation shown. The label 78 can optionally function as a "billboard" part of the package. For example, a discrete paper label can be affixed to any portion of support member 72. This label can carry the typical information identifying the contents of the package, weight, volume, or units contained in the package, vendor, bar code, etc. Alternatively, the support member 72 can be printed, by any suitable means, with the identifying indicia.

Although a label is shown herein with respect to the embodiment of Figures 4 and 5, the support member 62 of Figure 3 can optionally have a label, or print or trap print, carrying suitable indicia.

Figure 5 illustrates package 70 as in Figure 4, viewed toward inclined face 71 of the package. Face 71 allows the consumer to view the contents of the package. Label 78 can be placed on face 71 as shown, or on any other portion of package 70. Alternatively, as discussed further below, the support member 72 can be a laminate that includes trap printed product information or other printed indicia.

Non-woven lids 26 and 46 of Figures 1 and 2 respectively can optionally also have a label carrying suitable indicia. It will be noted however that if the label covers some portion of the highly permeable lid, some loss of permeability may occur depending the size of any such label.

Various modifications will become evident to those skilled in the art after a review of the specification. These modifications are deemed to be within the scope of the invention as daimed below. For example, although the emphasis in this disclosure has been on the use of the invention in connection with the packaging of produce, it has been found that a package in accordance with the invention can be provided wherein the packaged product is a fusible salt. This material is used as an explosion insulator in e.g. military and security applications, and a package containing such materials should be able to conveniently and securely hold the salts, and then rapidly express from the package the gasses emitted from the salts during an explosion. Thus, the term "oxygen sensitive product" as used herein also broadly includes products such as fusible salts that create rapid gas (oxygen or other gas) production inside the package as a result of an outside stimulus such as an explosion, or an internal stimulus such as a chemical or physical reaction of the contents of the package.

Because non-woven materials of the invention are inherently hydrophobic, a package of the invention is resistant to liquid transfer in the case of e.g. water or juice trapped in the package.

In one embodiment, the support member can be a laminated structure. A formable substrate such as monolayer cast nylon 6,6 film (e.g. DARTEK^{™} F101 100 gauge film available from Enhanced Packaging can be trap printed (reverse printed) and then laminated to a support member such as a forming thermoplastic web. This eliminates the need for a label (where a label is otherwise desired) to be applied after packaging the oxygen sensitive product. The printed laminate can be a registered print such that the printed indicia appears consistently in the same respective location on each package in a plurality of packages made in accordance with the invention. An alternative laminate useful in connection with the present invention is a laminate including a coextruded substrate comprising a nylon material, and a biaxially oriented, trap printed polyester adhered to the substrate, as taught in US Patent No. 6,861,125 (Carlson et al.), incorporated by reference herein in its entirety.

## Claims

1. A package comprising:
(a) a support member;
(b) an oxygen sensitive product disposed on the support member; and
(c) a non-woven lid;
wherein the non-woven lid exhibits a Guriey Hill porosity (TAPPI T460) of from 1 to 10 seconds per 100 cubic centimeters.

2. A process for packaging an oxygen sensitive product comprising:
a) providing a support member;
b) placing the oxygen sensitive product on the support member; and
c) adhering a non-woven material to the support member such that a closed package is made;
wherein the non-woven material exhibits a Gurley Hill porosity (TAPPI T460) of from 1 to 10 seconds per 100 cubic centimeters.

3. The package of claim 1 or the process of claim 2 wherein the support member comprises a tray.

4. The package or process of any one of the preceding claims wherein the support member comprises a thermoformed tray.

5. The package or process of any one of the preceding claims wherein the support member comprises a material selected from the group consisting of polyethylene, polypropylene, polystyrene, polyamide, 1,4- polymethylpentene, and crystallized polyethylene terephthalate

6. The package or process of any one of the preceding claims wherein the oxygen sensitive product comprises a material selected from the group consisting of asparagus, lettuce, cabbage, broccoli, green beans, cauliflower, spinach, kale, carrot, onion, pepper, corn, radish, endive, chard, chicory, radicchio, greens, peas, squash, escarole, brussel sprouts, alfalfa sprouts, mushrooms, melon, and berries.

7. The package or process of any one of the preceding claims wherein the non-woven lid exhibits a Gurley Hill porosity (TAPPI T460) of from 3 to 8 seconds per 100 cubic centimeters.

8. The package or process of any one of the preceding claims wherein the non-woven lid comprises a composite of a first non-woven material and a second non-woven material.

9. The package or process of claim 8 wherein the second non-woven material has a Gurley Hill porosity different from that of the first non-woven material.

10. The package or process of any one of the preceding claims wherein the non-woven lid has an average fiber diameter of greater than 50 micrometers.

11. The package or process of any one of the preceding claims wherein the non-woven lid is sealed to the support member with a seal strength of from 1 to 6 pounds/inch.
